# EUROPÄISCHE PATENTSCHRIFT

(11) **EP 0 658 456 B1**
(45) Veröffentlichungstag und Bekanntmachung des Hinweises auf die Patenterteilung: **20.03.1996**
(21) Anmeldenummer: 94116120.0
(22) Anmeldetag: 13.10.1994
(51) Int. Cl.: B60K 15/077, F02M 37/02

(54) **Saugstrahlpumpeneinheit**
Jet pump unit
Ensemble de pompe à jet

(30) Priorität: 17.12.1993 DE 4343199
(43) Veröffentlichungstag der Anmeldung: 21.06.1995
(73) Patentinhaber: VDO Adolf Schindling AG, D-60326 Frankfurt/Main (DE); Bayerische Motoren Werke Aktiengesellschaft, D-80788 München (DE)
(72) Erfinder: Werkmann, Karl-Heinz, D-63477 Maintal 1 (DE); Reiter, Frank, D-65812 Bad Soden (DE); Dasbach, Burkhard, D-65817 Eppstein (DE); Bigalke, Manfred, D-85591 Vaterstetten (DE)
(74) Vertreter: Klein, Thomas, Dipl.-Ing. (FH)

(56) Entgegenhaltungen:
- EP-A- 0 191 362
- DE-A- 4 123 367
- GB-A- 2 236 990
- US-A- 4 716 931

## Beschreibung

Die Erfindung betrifft eine Saugstrahlpumpeneinheit, welche eine mittels eines flexiblen Schlauches mit einem in eine Öffnung eines Kraftstofftanks einsetzbaren Halteflansch verbundene Saugstrahlpumpe hat, die durch einen ebenfalls am Halteflansch befestigten Niederhalter vom Halteflansch weg vorgespannt ist.

Saugstrahlpumpeneinheiten der vorstehenden Art werden derzeit in Kraftstofftanks heutiger Kraftfahrzeuge eingebaut und sind deshalb bekannt. Sie dienen dazu, aus einer Kraftstoffkammer des Kraftstofftanks Kraftstoff in die andere Kraftstoffkammer zu fördern. Als Treibmittel benutzt man für solche Saugstrahlpumpeneinheiten meist den von der Einspritzanlage des Kraftfahrzeugmotors zurückfließenden Kraftstoff. Üblicherweise ist die in einer Kraftstoffkammer angeordnete Saugstrahlpumpe mittels ihres flexiblen Schlauches fest mit dem Halteflansch verbunden. Auch der Niederhalter bildet mit dem Halteflansch eine bauliche Einheit.

Nachteilig ist es bei den bekannten Saugstrahlpumpeneinheiten, daß diese mit ihrem Niederhalter, ihrem flexiblen Schlauch und dem Halteflansch ein recht sperriges Bauteil bildet, was sich bei der Montage nachteilig bemerkbar macht.

Der Erfindung liegt das Problem zugrunde, eine Saugstrahlpumpeneinheit der eingangs genannten Art so zu gestalten, daß ihr Ein- bzw. Ausbau in eine Kraftstoffkammer eines Kraftstofftanks möglichst einfach ist.

Dieses Problem wird erfindungsgemäß gelöst durch ein lösbar mit dem Halteflansch verbundenes Kuppelteil, an welchem der Niederhalter und der Schlauch befestigt sind.

Diese Gestaltung erlaubt es, bei der Montage zunächst den Halteflansch und die Baueinheit mit dem Kuppelteil, dem Niederhalter und der Saugstrahlpumpe als separate Teile zu handhaben. Man kann dann die Saugstrahlpumpe mit dem Kuppelteil und dem Niederhalter erst in die Kraftstoffkammer teilweise einschieben und dann die Verbindung mit dem Halteflansch herstellen, was wesentlich leichter zu bewerkstelligen ist als der Einbau einer von Anfang an eine Einheit bildendes Bauteil.

Das Kuppelteil ist auf einfache Weise vor Verdrehung relativ zum Halteflansch gesichert, wenn gemäß einer vorteilhaften Ausgestaltung der Erfindung das Kuppelteil nebeneinander zwei in entsprechende Aufnahmen des Halteflansches einsteckbare Einsteckteile hat, von denen das erste Einsteckteil als Rohrstück zum Verbinden der Saugstrahlpumpe mit einem Kraftstoffanschluß des Halteflansches und das zweite Einsteckteil als Verdrehsicherung ausgebildet ist.

Vorteilhaft ist es auch, wenn im ersten Einsteckteil oder der Aufnahme für das erste Einsteckteil ein in Richtung der Saugstrahlpumpe öffnendes Rückschlagventil angeordnet ist. Ein solches Rückschlagventil ist durch die Trennbarkeit zwischen dem Kuppelteil und dem Halteflansch besonders leicht einzubauen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Querschnitt durch einen Teilbereich eines Kraftstofftanks mit der erfindungsgemäßen Saugstrahlpumpeneinheit,
- Fig.2: einen Schnitt durch eine Halterung der Saugstrahlpumpeneinheit.

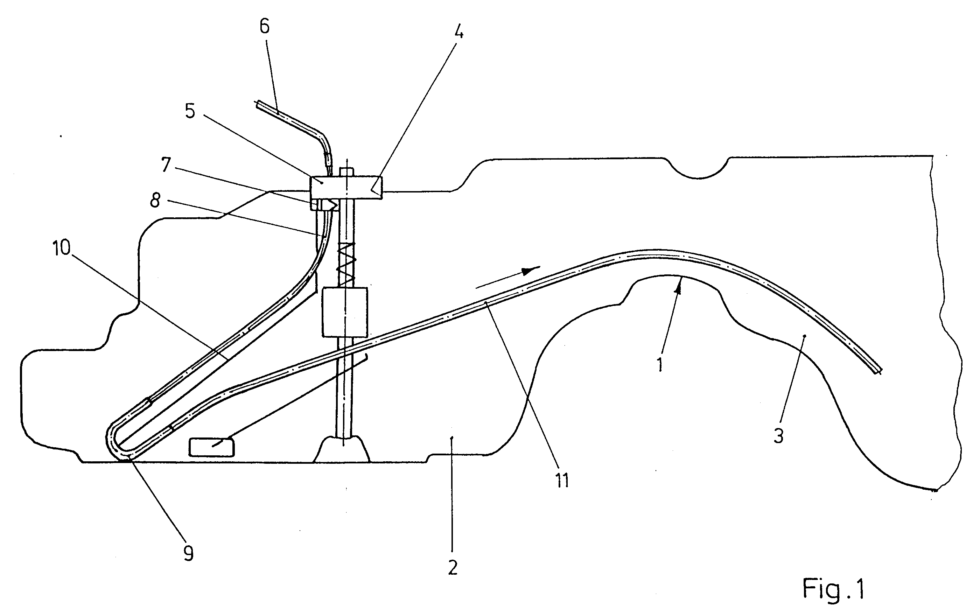

Die Figur 1 zeigt einen Kraftstofftank 1, welcher zwei Kraftstoffkammern 2, 3 hat. Die Kraftstoffkammer 2 hat an ihrer Oberseite eine Öffnung 4, in die von oben her ein Halteflansch 5 eingesetzt ist. In diesen Halteflansch 5 führt eine Rücklaufleitung 6 hinein, welche von einer Einspritzanlage zurückfließenden Kraftstoff führt. Dieser Kraftstoff fließt vom Halteflansch 5 über ein lösbar mit diesem verbundenes Kuppelteil 7 und einen flexiblen Schlauch 8 zu einer Saugstrahlpumpe 9, welche auf dem Boden der Kraftstoffkammer 2 aufliegt und in dieser Position durch einen am Kuppelteil 7 befestigten Niederhalter 10 gehalten wird. Bei diesem Niederhalter 10 kann es sich um einen Halter aus Federstahl handeln.

Die Saugstrahlpumpe 9 saugt durch den zurückfließenden Kraftstoff als Treibmittel Kraftstoff aus der Kraftstoffkammer 2 an und fördert ihn über eine Leitung 11 in die andere Kraftstoffkammer 3.

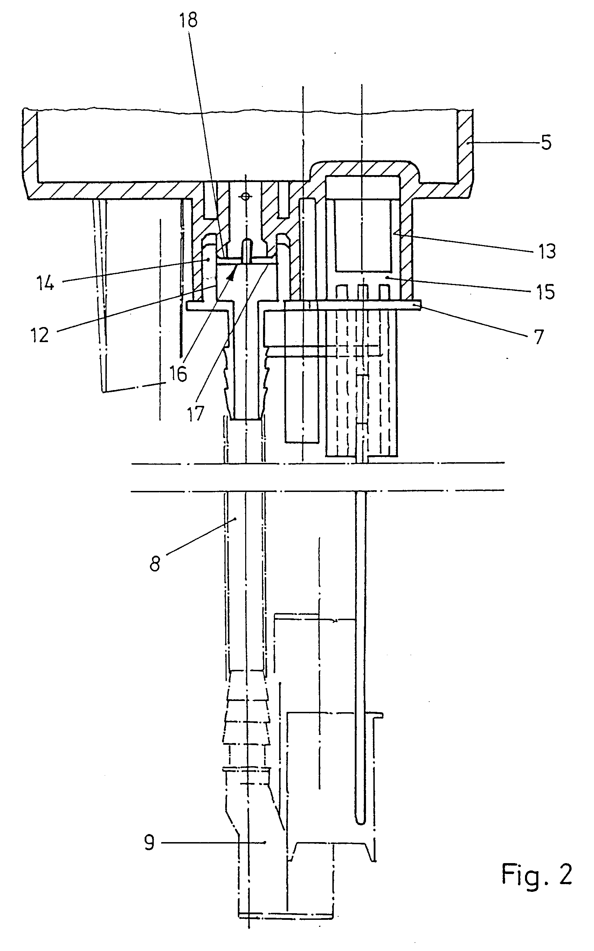

Die Schnittdarstellung gemäß Figur 2 zeigt das untere Ende des Halteflansches 5. Dieser hat nebeneinander zwei Aufnahmen 12, 13, in welche das Kuppelteil 7 jeweils mit einem Einsteckteil 14, 15 eingesetzt ist. Nicht gezeigt sind Verrastungsmittel, durch die das Kuppelteil 7 in der dargestellten, eingesetzten Position lösbar verrastet ist. Bei dem Einsteckteil 14 handelt es sich um ein Rohrstück, über welches der als Treibmittel dienende, zurücklaufende Kraftstoff zum Schlauch 8 und über diesen zur Saugstrahlpumpe 9 gelangen kann. Das Einsteckteil 15 dient lediglich als Verdrehsicherung.

In Figur 2 ist weiterhin ein Rückschlagventil 16 in der Aufnahme 12 dargestellt, welches eine Ventilplatte 17 hat, die in der Zeichnung gesehen von unten her gegen einen Ventilsitz 18 anliegt. Das Rückschlagventil 16 verhindert, daß Kraftstoff aus dem Kraftstofftank 1 herausgelangen kann, wenn das Kraftfahrzeug in eine extreme Schräglage gelangt oder infolge eines Unfalls gar auf dem Dach zu liegen kommt.

## Patentansprüche

1. Saugstrahlpumpeneinheit, welche eine mittels eines flexiblen Schlauches mit einem in eine Öffnung eines Kraftstofftanks einsetzbaren Halteflansch verbundene Saugstrahlpumpe hat, die durch einen ebenfalls am Halteflansch befestigten Niederhalter vom Halteflansch weg vorgespannt ist, gekennzeichnet durch ein lösbar mit dem Halteflansch (5) verbundenes Kuppelteil (7), an welchem der Niederhalter (10) und der Schlauch (8) befestigt sind.

2. Saugstrahlpumpeneinheit nach Anspruch 1, dadurch gekennzeichnet, daß das Kuppelteil (7) nebeneinander zwei in entsprechende Aufnahmen (12, 13) des Halteflansches (5) einsteckbare Einsteckteile (14, 15) hat, von denen das erste Einsteckteil (14) als Rohrstück zum Verbinden der Saugstrahlpumpe (9) mit einem Kraftstoffanschluß des Halteflansches (5) und das zweite Einsteckteil (15) als Verdrehsicherung ausgebildet ist.

3. Saugstrahlpumpeneinheit nach Anspruch 2, dadurch gekennzeichnet, daß im ersten Einsteckteil (14) oder der Aufnahme (12) für das erste Einsteckteil (14) ein in Richtung der Saugstrahlpumpe (9) öffnendes Rückschlagventil (16) angeordnet ist.

## Claims

1. Jet pump unit, which has a jet pump which is connected by means of a flexible hose to a securing flange which can be inserted into an opening of a fuel tank, the said jet pump being pretensioned away from the securing flange by means of a securing element which is also attached to the securing flange, characterized by a coupling component (7) which is detachably connected to the securing flange (5) and to which the retaining element (10) and the hose (8) are attached.

2. Jet pump unit according to Claim 1, characterized in that the coupling part (7) has, one next to the other, two plug-in parts (14, 15) which can be inserted into corresponding receptacles (12, 13) of the securing flange (5), the first plug-in part (14) of which is constructed as a tubular element for connecting the jet pump (9) to a fuel connection of the securing flange (5) and the second plug-in part (15) is constructed as an anti-rotation element.

3. Jet pump unit according to Claim 2, characterized in that a non-return valve (16) which opens in the direction of the jet pump (9) is arranged in the first plug-in part (14) or the receptacle (12) for the first plug-in part (14).

## Revendications

1. Ensemble comprenant une pompe aspirante à jet, muni d'une pompe aspirante à jet qui est reliée, au moyen d'un flexible, à une collerette de retenue pouvant être insérée dans un orifice d'un réservoir de carburant, ladite pompe étant soumise à une précharge, à distance de la collerette de retenue, par l'intermédiaire d'une pièce de consignation à demeure qui est semblablement fixée à ladite collerette de retenue, caractérisé par une pièce d'accouplement (7) qui est reliée à la collerette de retenue (5) de manière libérable, et à laquelle la pièce (10) de consignation à demeure et le flexible (8) sont fixés.

2. Ensemble comprenant une pompe aspirante à jet, selon la revendication 1, caractérisé par le fait que la pièce d'accouplement (7) possède, en juxtaposition, deux parties emboîtables (14, 15) pouvant être emboîtées dans des logements correspondants (12, 13) de la collerette de retenue (5), la première partie emboîtable (14) étant réalisée sous la forme d'une pièce tubulaire, pour relier la pompe aspirante (9) à jet à un raccord de carburant de la collerette de retenue (5), et la seconde partie emboîtable (15) étant réalisée sous la forme d'un système de verrouillage antirotation.

3. Ensemble comprenant une pompe aspirante à jet, selon la revendication 2, caractérisé par le fait qu'un clapet antiretour (16), s'ouvrant en direction de la pompe aspirante (9) à jet, est disposé dans la première partie emboîtable (14) ou dans le logement (12) affecté à la première partie emboîtable (14).
